# EUROPEAN PATENT APPLICATION

(11) **EP 4 670 920 A1**
(43) Date of publication of application: **31.12.2025**
(21) Application number: 24796048.7
(22) Date of filing: 23.04.2024
(51) Int. Cl.: B25F 5/02, A01G 3/08

(54) **MULTIFUNCTIONAL GARDEN TOOL**

(30) Priority: 28.04.2023 CN 202310503369; 28.04.2023 CN 202310485800; 28.04.2023 CN 202321033584 U; 28.04.2023 CN 202321054234 U
(71) Applicant: Zhejiang Prulde Electric Appliance Co., Ltd., Jinhua, Zhejiang 321035 (CN)
(72) Inventor: YANG, Chenghao, Jinhua, Zhejiang 321035 (CN); PAAIS, Raymond, 7951 SN Staphorst (NL)
(74) Representative: karo IP
(86) International application number: PCT/CN2024/089294
(87) International publication number: WO 2024/222668

(57) **Abstract**

A garden multitool, which relates to a power tool, including a working assembly, the working assembly having an electric motor and a working head, the electric motor actuating the working head to swing back and forth on a working plane; the garden multitool further includes a shaft and a handle assembly, the working assembly being attached to a front end of the shaft, the handle assembly being attached to a rear end of the shaft, a lengthwise direction of the shaft being parallel to the working plane. By appropriately improving the structure of the garden multitool, the functional utilities of the swing power tool are reasonably extended, which helps to enhance user experience.

## Description

### FIELD

The present application relates to a power tool, and more particularly relates to a garden multitool.

### BACKGROUND

With technological advancement, various types of power tools have been increasingly applied in manufacturing and daily tasks. The power tools significantly enhance work efficiency and reduce labor intensity. A swing shovel is a typical back-and-forth swing tool, of which an electric motor accommodated in a housing actuates a head connected to an output shaft to perform a high-frequency back-and-forth swing motion. The swing shovel may implement various functions such as cutting, sanding, scraping, rough filing, and polishing to satisfy versatile user demands. However, existing swing shovels can only perform ground-level tasks and are unsuitable for use as garden tools; due to this functional limitation, they cannot offer versatility that users demand.

### SUMMARY

To overcome the above and other drawbacks and disadvantages in conventional technologies, the present invention provides a garden multitool; due to additional provision of a shaft and a handle assembly, a back-and-forth swing tool can be used as a garden tool, which extends functional utilities of a garden multitool to a reasonable extent and improves user experience.

A garden multitool according to the present application comprises a working assembly, the working assembly having an electric motor and a working head, the electric motor actuating the working head to swing back and forth on a working plane; the garden multitool further comprises a shaft and a handle assembly, the working assembly being attached to a front end of the shaft, the handle assembly being attached to a rear end of the shaft, a lengthwise direction of the shaft being parallel to the working plane.

With the technical solution noted supra, the present invention offers the following advantages:
1. The garden multitool according to the present invention additionally provides a shaft and a handle assembly based on a back-and-forth swing working assembly, so that the garden multitool can be used for gardening tasks. When the working head is a saw blade, the machine may be used to cut branches higher up on a tree. When the working head is a steel wire head, the machine may perform tasks such as weed removing, moss removing, and de-rusting. By appropriately improving the structure of the garden multitool, the functional utilities of the swing power tool are reasonably extended, which helps to enhance user experience. Since the working head has a high back-and-forth swinging frequency, the machine offers a high operating efficiency in tasks such as weed removing, branch cutting, moss removing, and de-rusting, which helps to improve operating efficiency. Since a speed reduction structure is eliminated from the swing working assembly, the weight of the working head at the front end of the shaft can be significantly reduced, which may ease the user's operation while ensuring working efficiency. Since the working head has a small back-and-forth swing angle in the working plane, it facilitates adjusting the orientation of the working head according to the operating condition and environment condition so that the working head can work effectively in a narrow operating space.

### BRIEF DESCRIPTION OF THE DRAWINGS

Fig. 1 is an overall structural view of a garden multitool;
Fig. 2 is a local structural view of the garden multitool;
Fig. 3 is a partial structural view of a working assembly in the garden multitool;
Fig. 4 is a partial structural exploded view of the working assembly in the garden multitool;
Fig. 5 is an axial sectional view of a partial structure of the working assembly in the garden multitool;
Fig. 6 is a structural view of fitting between an electric motor and a rotary member in the garden multitool;
Fig. 7 is a structural view of fitting between an electric motor, a rotary member, and a shift fork in the garden multitool;
Fig. 8 is a side view of the garden multitool;
Fig. 9 is a local structural schematic view of the garden multitool;
Fig. 10 is a schematic view of fitting between the working assembly and a body housing of the garden multitool;
Fig. 11 is a schematic view of fitting between the working assembly and a handle assembly in the garden multitool;
Fig. 12 is a structural view of a steel wire head;
Fig. 13 is an exploded view of the steel wire head;
Fig. 14 is a partial structural view of the steel wire head;
Fig. 15 is a partial structural fitting schematic diagram of an alternative structure of the steel wire head;
Fig. 16 is a structural view of a saw blade;
Fig. 17 is an enlarged view of part A in Fig. 16;
Fig. 18 is a partial structural view of the garden multitool when an axial direction of the electric motor is perpendicular to a working plane.

In the drawings: 100 - working assembly; 110 - electric motor; 111 - output shaft; 121 - inner shaft; 122 - outer shaft; 123 - upper chuck; 124 - lower chuck; 125 - bearing; 126 - spring; 127 - limiting pin; 128 - shaft cap; 129 - unlock member; 1210 - recess; 130 - head housing; 141 - rotary shaft; 142 - rotary member; 143 - shift fork; 143a - sleeving portion; 143b - forked arm; 150 - shovel blade; 151 - first mounting portion; 152 - bent portion; 153 - first working portion; 154 - first mounting slot; 160 - stepped surface; 100A - working head; 100B - clamping structure; 101B - elastic piece; 100C - transmission structure;
200 - shaft; 210 - shaft body; 220 - adjusting sleeve; 230 - securing base;
300 - handle assembly; 310 - handle; 320 - battery pack;
400 - body housing; 400A - grip portion;
500 - steel wire head; 510 - second mounting portion; 511 - second mounting slot; 512 - second limiting hole; 520 - second working portion; 521 - arcuate edge; 522 - wire blade; 523 - first clamping plate; 5231 - first skirt; 524 - second clamping plate; 5241 - second skirt; 525 - securing plate; 5251 - securing hole; 526 - edge wrapping piece; 520A - securing member;
600 - saw blade; 610 - third mounting portion; 611 - third mounting slot; 612 - third limiting hole; 620 - sawing portion; 621 - inner saw tooth; 621a - inner tooth edge; 622 - outer saw tooth; 622a - outer tooth edge; 623 - guiding beveled edge; 630 - object holding slot; 640 - connecting portion.

### DETAILED DESCRIPTION OF EMBODIMENTS

Hereinafter, the present invention will be further illustrated through example implementations with reference to the accompanying drawings. It would be understood that the orientational or positional relationships indicated by the terms "upper," "lower," "left," "right," "longitudinal," "transverse," "inner," "outer," "vertical," "horizontal," "top," "bottom," and etc. are orientational and positional relationships based on the drawings, which are intended only for facilitating description of the invention and simplifying relevant illustrations, not for indicating or implying that the devices or elements compulsorily possess those specific orientations and are compulsorily configured and operated with those specific orientations; therefore, such terms shall not be construed as limitations to the invention.

### Implementation

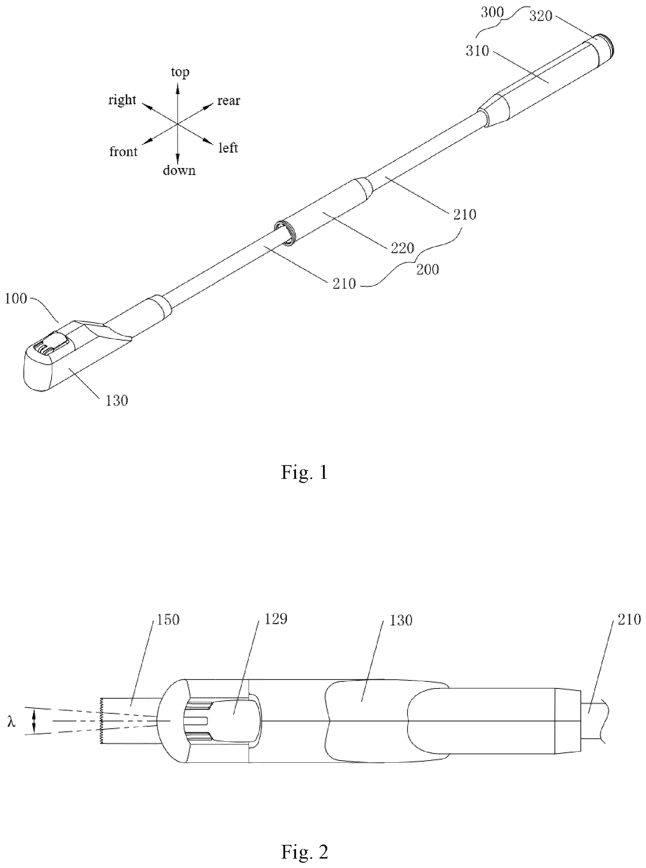

Referring to Figs. 1 to 8, a garden multitool according to an implementation of this invention comprises a working assembly 100 comprising an electric motor 110 and a working head 100A, the electric motor 110 actuating the working head 100A to swing back and forth on a working plane P. The garden multitool further comprises a shaft 200 and a handle assembly 300, the working assembly 100 being attached to a front end of the shaft 200, the handle assembly 300 being attached to a rear end of the shaft 200, a lengthwise direction of the shaft 200 being parallel to the working plane P.

Due to the shaft 200 and the handle assembly 300 additionally provided for the working assembly 100, a back-and-forth swing tool can be used as a garden tool. With this improved structure, the garden multitool is contributed with greater versatility, which helps enhance user experience.

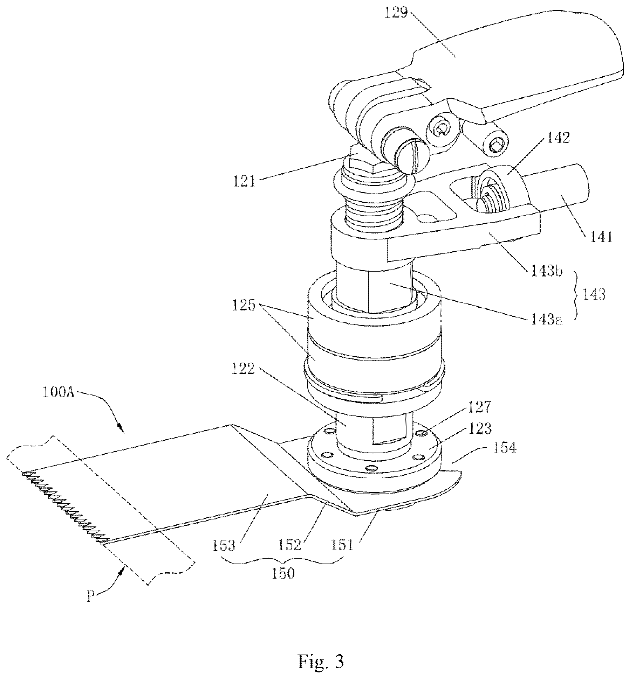

Referring to Figs. 2 and 3, in this implementation, the working assembly 100 further comprises a head housing 130, a clamping structure 100B configured to clamp or release the working head 100A, and a transmission structure 100C configured to transfer power; the electric motor 110 actuates, via the transmission structure 100C and the clamping structure 100B, the working head 100A to swing back and forth on the working plane P; the electric motor 110, the clamping structure 100B, and the transmission structure 100C are disposed inside the head housing 130, and the working head 100A is disposed outside the head housing 130.

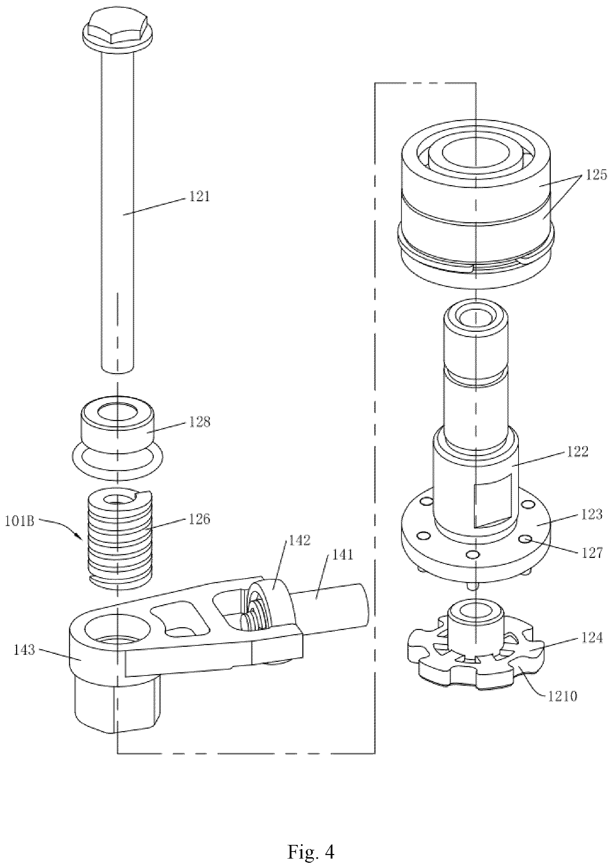

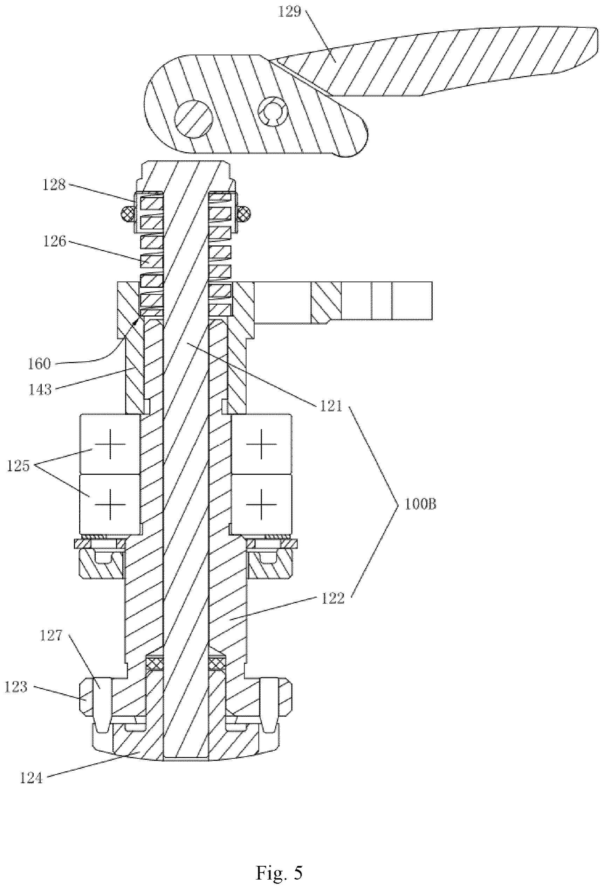

Referring to Figs. 4 and 5, the clamping structure 100B comprises an inner shaft 121 and an outer shaft 122 which are sleeved together, the inner shaft 121 being movable axially back and forth relative to the outer shaft 122, a bottom end of the outer shaft 122 being provided with an upper chuck 123, a bottom end of the inner shaft 121 being provided with a lower chuck 124 disposed underneath the upper chuck 123, the upper chuck 123 and the lower chuck 124 being fitted to clamp or release the working head 100A. In this implementation, the outer shaft 122 being rotatably disposed in the head housing 130 via two bearings 125 which are arranged parallelly one above the other, the upper chuck 123 and the lower chuck 124 being disposed outside the head housing 130, the upper chuck 123 being provided with a plurality of limiting pins 127 distributed circumferentially at intervals, the lower chuck 124 being provided with recesses 1210 corresponding to the limiting pins 127.

To allow for the lower chuck 124 to fit with the upper chuck 123 to clamp the working head, the clamping structure 100B further comprises an elastic piece 101B, the elastic piece 101B acting against the inner shaft 121 disposing the inner shaft 121 at a clamped position where the lower chuck 124 and the upper chuck 123 are fitted to clamp the working head 100A. In this implementation, the elastic piece 101B adopts a spring 126 sleeved outside the inner shaft 121, the spring 126 being disposed in a compressed state with its bottom end positionally retained and its top end abutting against the inner shaft 121. Specifically, a top end of the inner shaft 121 is sleeved with a shaft cap 128, a top end of the spring 126 abuts against the shaft cap 128 to thereby abut against the inner shaft 121, and a bottom end of the spring 126 abuts against a stepped surface 160 so as to be positionally retained. The spring 126 exerts an upward acting force against the inner shaft 121 so that the inner shaft 121 is disposed normally at the clamped position where the lower chuck 124 and the upper chuck 123 are fitted to clamp the working head 100A. It may be understood that the elastic piece 101B may also adopt another type of elastic member that can dispose the inner shaft 121 at the clamped position and drive the inner shaft 121 to reset to the clamped position.

To facilitate a user's replacing the working head 100A, the working assembly 100 further comprises an unlock member 129, the unlock member 129 acting against the inner shaft 121, the unlock member 129 being operable to drive the inner shaft 121 to move downward to an unlock position where the lower chuck 124 migrates away from the upper chuck 123. In this implementation, the unlock member 129 may be disposed on top of the head housing 130 in an upward-downward rotatable manner; when the unlock member 129 rotates upward, an underside of the unlock member 129 abuts against the inner shaft 121 driving the inner shaft 121 to overcome the elastic force of the spring 126 to move downward, the inner shaft 121 moving downward brings the lower chuck 124 to move downward synchronously so that the spring 126 is further compressed, driving the lower chuck 124 to migrate away from the upper chuck 123; this allows for the upper chuck 123 and the lower chuck 124 to release the working head 100A, whereby the working head 100A can be removed for replacement. After a new working head 100A is mounted, by turning the unlock member 129 downward, the unlock member 129 releases the inner shaft 121, and the spring 126 recovering from deformation may drive the inner shaft 121 and the lower chuck 124 to move upward to reset, whereby the lower chuck 124 and the upper chuck 123 re-clamp the working head 100A.

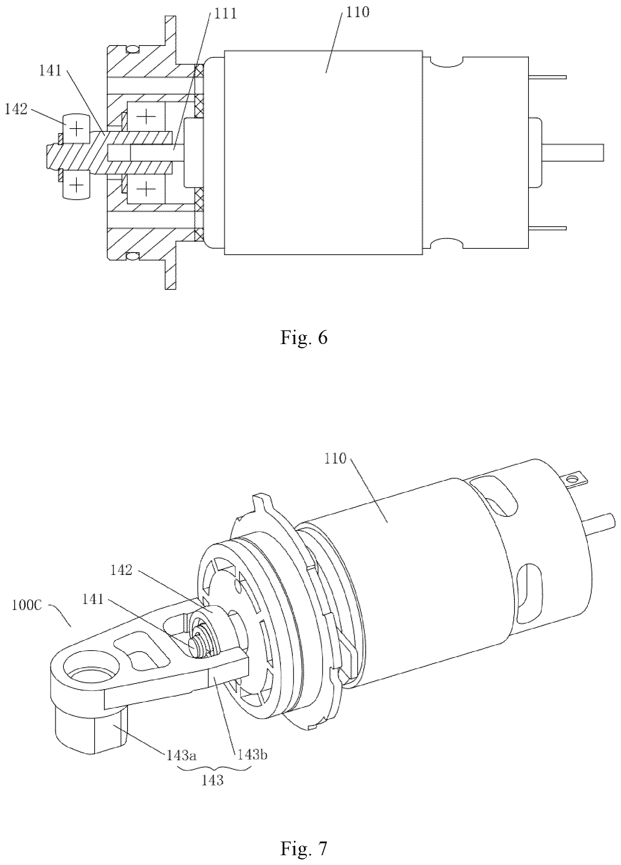

Referring to Figs. 6 and 7, the transmission structure 100C comprises a rotary shaft 141 actuated by the electric motor 110, a rotary member 142 eccentrically sleeved on the rotary shaft 141, and a shift fork 143 sleeved on the outer shaft 122 and fitted with the rotary member 142, the rotary shaft 141 being set perpendicular to the outer shaft 122, the eccentrically rotating rotary member 142 driving, via the shift fork 143, the clamping structure 100B to swing back and forth. In this implementation, the axial direction of the electric motor 110 is set parallel to the working plane P, the rotary shaft 141 is rotatably disposed, via a bearing, at a front end of the electric motor 110, a rear end of the rotary shaft 141 is directly drivingly coupled to an output shaft 111 of the electric motor 110, the front end of the rotary shaft 141 is eccentrically disposed relative to the rear end thereof, the rotary member 142 is sleeved on the front end of the rotary shaft 141, and the rotary member 142 is eccentrically disposed relative to the output shaft 111, i.e., a central axis of the rotary member 142 does not overlap with the central axis of the output shaft 111. Referring to Fig. 7, the shift fork 143 comprises a sleeving portion 143a and a fork arm 143b which are unitarily formed, the sleeving portion 143a being sleeved outside the outer shaft 122, the sleeving portion 143a and the outer shaft 122 being circumferentially limited relative to each other. Two fork arms 143b are provided left-right symmetrically. The rotary member 142 is disposed between the two fork arms 143b and engages the fork arms 143b. It may be understood that the rotary member 142 may adopt a component such as a bearing, and a roller fixedly sleeved on the front end of the rotary shaft 141.

The electric motor 110 drives, via the rotary shaft 141, the rotary member 142 to rotate eccentrically, the eccentrically rotating rotary member 142 drives, via the shift fork 143, the clamping structure 100B to swing left and right, and the clamping structure 100B drives the working head 100A to swing back and forth on a left-right plane P. Since the rotary shaft 141 is directly drivingly coupled to the output shaft 111 of the electric motor 110, the rotary shaft 141 gains a high rotational speed; correspondingly, the working head 100A also gains a high swing frequency, which helps enhance work efficiency. Referring to Fig. 2, in this implementation, a range λ of the back-and-forth swing angle of the working head 100A is from 3° to 10°. Specifically in this implementation, the range λ of the back-and-forth swing angle of the working head 100A refers to the maximum swing angle of the front-rear centerline of the working head 100A in the left-right direction, the range λ of the back-and-forth swing angle being about 8°. It may be understood that, the range λ of the back-and-forth swing angle may also be set to any other appropriate value such as 3°, 4°, 5°, 6°, 7°, 9°, and 10°.

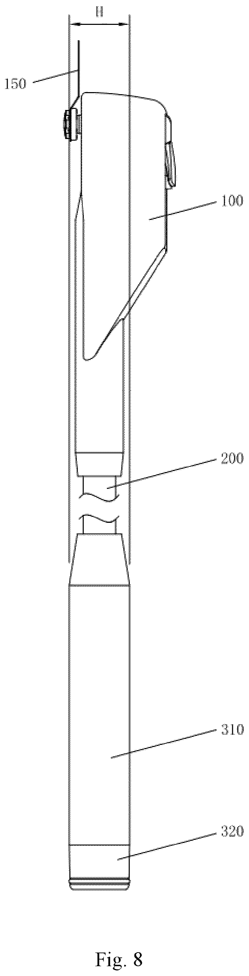

Referring to Fig. 8, the handle assembly 300 comprises a handle 310 and a battery pack 320, the handle 310 being fixed to a rear end of a shaft body 210, the battery pack 320 being detachably connected to a rear end of the handle 310. This detachable setting facilitates replacement of the battery pack 320 dependent on its power level for continued use; or, when the battery pack 320 has reached the end of its service life, it is only needed to purchase a new one, which helps reduce the user's usage costs. In this implementation, the voltage of the battery pack 320 is 12V, and the outer profile of the battery pack 320 is preferably consistent with that of the handle 310, i.e., the outer diameter of the battery pack 320 is consistent with that of the handle 310. It may be understood that the battery pack 320 may also be attached to another appropriate position of the handle 310, e.g., the top or the bottom thereof. Additionally, in a case of a high-voltage battery pack 320, the outer profile of the battery pack 320 may also be set larger than that of the handle 310, i.e., the outer diameter of the battery pack 320 may be greater than that of the handle 310.

To facilitate length adjustment of the shaft 200, the shaft 200 preferably adopts a telescopic shaft in this implementation, two adjacent segments of the shaft body 210 of the shaft 200 are movably connected via an adjusting sleeve 220; a specific structure of the adjusting sleeve 220 may refer to conventional technologies, which is not detailed here. Due to its telescopic property, the shaft 200 may have its length flexibly adjustable dependent on a specific application scenario so as to better satisfy different operating demands of the user. It may be understood that the shaft body 210 of the shaft 200 may be connected telescopically via an existing spring leaf structure; of course, the shaft 200 may also adopt a single-segment shaft structure with a fixed length.

Referring to Fig. 3, the working head 100A in this implementation includes a shovel blade 150, the shovel blade 150 comprising a first mounting portion 151, a bent portion 152, and a first working portion 153 which are sequentially distributed from front to rear and unitarily formed, the first working portion 153 and the first mounting portion 151 being arranged one above the other in an offset manner. The first mounting portion 151 is provided with a first mounting slot 154 of substantially U-shape and first limiting holes distributed on an outer periphery of the first mounting slot 154; when mounting the shovel blade 150 to the machine body, the first mounting portion 151 moves from front to rear so that the inner shaft 121 is snapped into the first mounting slot 154, the first limiting holes being aligned with the limiting pins 127; and reset of the inner shaft 121 brings the lower chuck 124 to move upward to fit with the upper chuck 123 to clamp the first mounting portion 151, the limiting pins 127 being inserted into the corresponding first limiting holes.

Referring to Figs. 1 and 8, the front-rear direction is defined as the lengthwise direction, the left-right direction is defined as the widthwise direction, and the up-down direction is defined as the heightwise direction. To enhance stability of the tool when being operated by the user, the working head 100A is at least locally rested in a heightwise scope of the handle assembly 300 in the heightwise direction. By appropriately reducing the offset distance of the working head 100A relative to the heightwise centerline of the handle assembly 300, the moment which is induced by the action force the working head 100A receives during operating and acts on the handle assembly 300 can be reduced to a reasonable extent; this reduces the force required for the user to hold the tool stably via the handle assembly 300 when operating the tool, which achieves the purpose of reducing labor, enhances operating stability of the user, and improves user experience. Preferably, the working head 100A is at least locally rested in the heightwise scope of the handle 310 in the heightwise direction. It may be understood that when the height of the battery pack 320 is consistent with that of the handle 310, the working head 100A is at least partially rested in the heightwise scope of the handle assembly 300; when the height of the battery pack 320 is greater than that of the handle 310, the working head 100A is at least partially rested in the heightwise scope of the handle 310.

Referring to Fig. 8, when the shovel blade 150 is operating, since the first working portion 153 of the shovel blade 150 is mainly stressed, the first working portion 153 of the shovel blade 150 is preferably rested in the heightwise scope of the handle 310. In this implementation, the shovel blade 150 is entirely rested in the heightwise scope of the handle 310. It may be understood that the first working portion 153 of the shovel blade 150 may alternatively be rested in the heightwise scope of the handle 310, while the first mounting portion 151 and the bent portion 152 of the shovel blade 150 are rested beyond the height range of the handle 310.

To enable the user to hold the tool stably by the handle 310, it is appropriate to set the height H of the handle 310 within the range 30mm≤H≤60mm. If the height of the handle 310 is less than 30mm, the handle will be too thin so that the user has to bend his/her fingers a lot to grip it, which compromises the user's grip comfort. If the height of the handle 310 exceeds 60mm, it will be too thick for the user to grip securely, which compromises the stability when the user holds the power tool. In this implementation, the height H of the handle 310 is about 48mm. It may be understood that the height H of the handle 310 may also be set to 30mm, 35mm, 40mm, 42mm, 44mm, 46mm, 47mm, 49mm, 50mm, 52mm, 54mm, 56mm, 58mm, 60mm, or any other appropriate value; the left-right cross-section profile of the handle 310 may be configured as a circular shape, an oblate shape, a rounded rectangular shape, a rounded square shape, or any other reasonable shape.

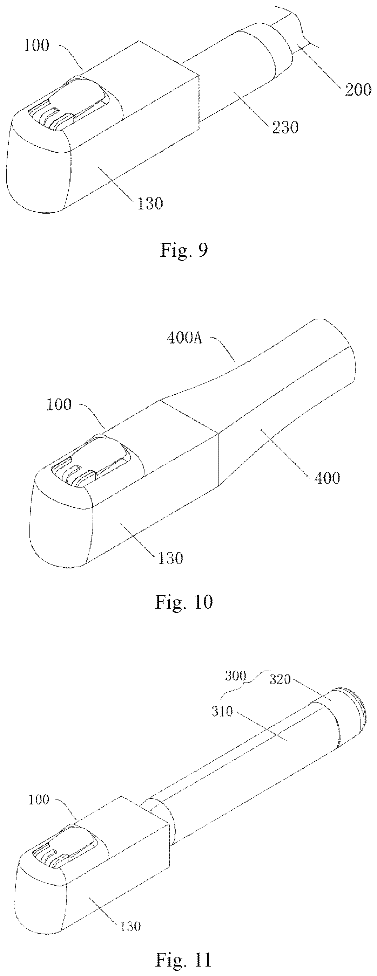

Referring to Fig. 9, a securing base 230 may be provided at the front end of the shaft 200, the head housing 130 being detachably fitted with the securing base 230. Referring to Fig. 10, the garden multitool in this implementation may further comprise a body housing 400, the body housing 400 being formed with a grip portion 400A, the head housing 130 being detachably fitted with the body housing 400. When the working assembly 100 is assembled to the securing base 230, the garden multitool is used as a long-handled tool with an extended operating range. When the working assembly 100 is removed from the securing base 230 and re-attached to the body housing 400, the garden multitool assembled by the working assembly 100 and the body housing 400 may be used as a short-handled tool. It may be understood that a detachably secured fit may be implemented between the head housing 130 and the securing base 230 and between the head housing 130 and the body housing 400 via an appropriate structure such as a snap-fitting structure, a thread-fitting structure, and a locking sleeve structure.

Referring to Fig. 11, based on the detachable fit between the head housing 130 and the securing base 230, in this implementation, the handle assembly 300 may also be detachably arranged at the rear end of the shaft 200, the head housing 130 being detachably fitted with the handle assembly 300, i.e., the head housing 130 removed from the securing base 230 may be directly secured with the handle assembly 300 removed from the shaft 200 to be thereby used as a short-handled tool. It may be understood that a detachably secured fit between the head housing 130 and the handle assembly 300 may be implemented via an appropriate structure such as a snap-fitting structure, a thread-fitting structure, and a locking sleeve structure.

By setting an appropriate fitting manner between the working assembly 100 and the securing base 230, the operating range of the tool is appropriately extended, so that the tool may perform sanding, scraping, rough filing, and polishing, as well as branch cutting, grass mowing, moss removing, etc., to better satisfy versatile user demands.

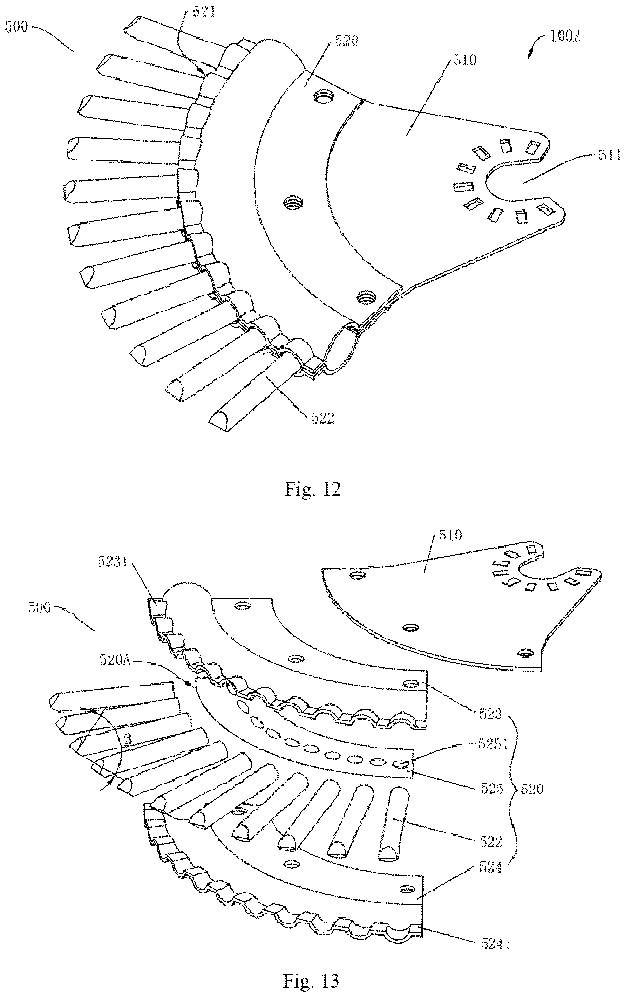

Referring to Fig. 12, the working head 100A of the garden multitool further includes a steel wire head 500, i.e., the steel wire head 500 is a type of the working head 100A. The steel wire head 500 comprises a second mounting portion 510 and a second working portion 520 which are fixed relative to each other, an arcuate edge 521 and a wire blade 522 are provided at one side of the second working portion 520 facing away from the second mounting portion 510, the wire blade 522 extending away from the second mounting portion 510, a plurality of the wire blades 522 being distributed along an arc direction of the arcuate edge 521.

By setting an appropriate distribution manner of the wire blades 522 based on motion characteristics of the garden multitool, an effective operating range of the second working portion 520 is ensured; since the wire blades 522 have a high strength and a high hardness, when the steel wire head 500 is actuated, the wire blades 522 are driven to swing back and forth performing functions such as grass mowing, moss removing, and de-rusting; since the garden multitool has a high output frequency, the steel wire head 500 also swings back and forth at a high frequency, which helps enhance working efficiency of the wire blades 522. The steel wire head 500 according to this implementation can extend functional utilities of the garden multitool to an appropriate extent, which helps enhance user experience.

Referring to Fig. 13, the second working portion 520 comprises a securing member 520A, a first clamping plate 523, and a second clamping plate 524, each wire blade 522 being arranged on the securing member, the first clamping plate 523 and the second clamping plate 524 being disposed at two opposite sides of the securing member to clamp the securing member 520A and the end portions of the wire blades 522 facing the second mounting portion 510. In this implementation, the securing member 520A adopts a flat securing plate 525, the securing plate 525 is provided with a plurality of securing holes 5251 distributed at intervals along an arc direction and configured to secure the wire blades 522, and respective wire blades 522 are fitted in the securing holes 5251 to be thereby mounted on the securing plate 525. Specifically, the wire blades 522 are formed by bent and twisted steel wire bundles passing through the securing holes 5251. Fit between the first clamping plate 523 and the second clamping plate 524 allows for the wire blades 522 and the securing member 520A to maintain structural stability relative to each other, which enhances structural strength of the wire blades 522, prevents the wire blades 522 from being deformed or displaced due to the stress received during operating, and thusly helps to ensure working performance stability of the wire blades 522. It may be understood that the securing member 520A may also adopt another appropriate structure, e.g., a steel wire rope, in which case the bent portion of the wire blade 522 is hung on the steel wire rope, the steel wire rope being tightly clamped between the first clamping plate 523 and the second clamping plate 524.

In this implementation, the second working portion 520 assumes an annular sector shape; correspondingly, the securing plate 525, the first clamping plate 523, and the second clamping plate 524 are all of a sector shape, the arcuate outer edge of the first clamping plate 523 and the arcuate outer edge of the second clamping plate 524 being combined to define the arcuate edge 521. A first skirt 5231 is provided at a front side of the first clamping plate 523 facing away from the second mounting portion 510, and a second skirt 5241 is provided at a front side of the second clamping plate 524 facing away from the second mounting portion 510, the first skirt 5231 and the second skirt 5241 being fitted to clamp respective rear ends of the wire blades 522 tightly. The first skirt 5231 of the first clamping plate 523 and the second skirt 5241 of the second clamping plate 524 are fitted with each other to clamp the rear ends of the wire blades 522; by setting an appropriate structure in which the first clamping plate 523 and the second clamping plate 524 are fitted to clamp the wire blades 522, it ensures that the rear ends of the wire blades 522 can be effectively positionally retained via fit between the first clamping plate 523 and the second clamping plate 524, thereby ensuring structural stability of the wire blades.

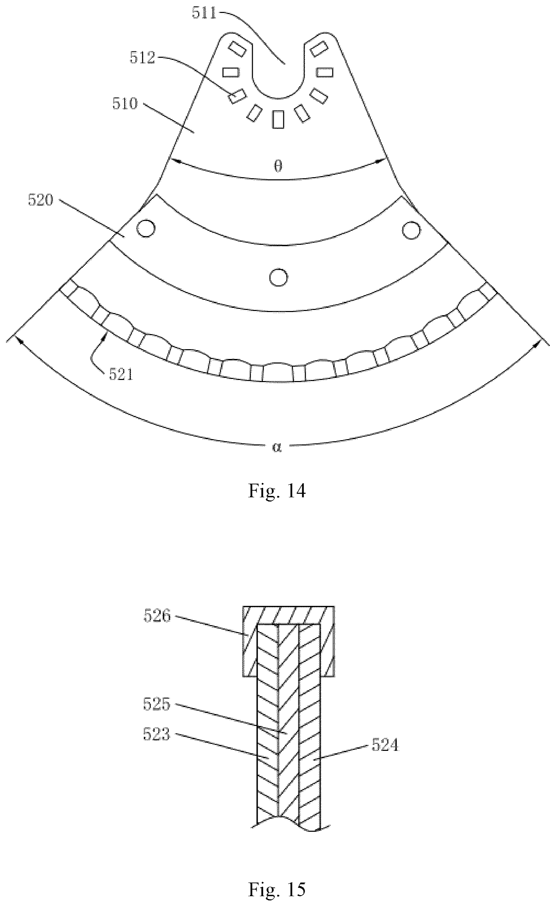

Referring to Fig. 14, to appropriately set a number of the wire blades 522, it is needed to set a central angle α of the annular sector-shaped second working portion 520 appropriately within the range 60° ≤ α ≤ 120°, the central angle of the arcuate edge 521 being consistent with the central angle α of the second working portion 520. By setting an appropriate central angle α of the arcuate edge 521, it ensures an effective operating range of the wire blades 522 while ensuring movement stability of the steel wire head 500. If α < 60°, the arcuate edge 521 has a shorter radian so that less wire blades 522 are distributed along the arc direction of the acuate edge 521, resulting in a narrowed effective operating range of the wire blades 522, which compromises operating efficiency. If α > 120°, the arcuate edge 521 has a longer radian with more wire blades 522 distributed along the arc direction of the arcuate edge 521, which increases the weight of the steel wire head 500 and thusly compromises movement stability of the steel wire head 500 swinging back and forth, so that the user easily loses balance during operating the tool. In this implementation, the central angle α of the second working portion 520 is set to 90°. It may be understood that the central angle α of the second working portion 520 may also be set to 60°, 65°, 70°, 75°, 80°, 85°, 89°, 91°, 95°, 100°, 105°, 110°, 115°, 120°, or any other appropriate value.

To allow for the wire blades 522 to handle weeds or mosses in crevices, a front end portion of the wire blade 522 is configured as a conical shape with a cone angle β, where 45° ≤ β ≤ 90°. By setting an appropriate cone angle β of the front end of the wire blade 522, the wire blade 522 may effectively clean the weeds or mosses in the crevices, which helps to enhance the cleaning effect. If β < 45°, the front end of the wire blade 522 is too pointed and easily deformed under stress, which compromises structural stability of the wire blade. If β > 90°, the front end of the wire blade is too blunt and hard to access the inside of the crevice to perform the cleaning task. In this implementation, the cone angle β of the front end of the wire blade 522 is preferably set to 70°; it may be understood that the cone angle β of the front end of the wire blade 522 may also be set to 45°, 50°, 55°, 60°, 65°, 69°, 71°, 75°, 80°, 85°, 90°, or any other appropriate value. After a certain period of service, the front end of the wire blade 522 likely spreads apart under stress; in this case, the cone angle β of the front end of the wire blade 522 will change.

In this implementation, the second mounting portion 510 is also configured to have a sector shape, a sector central angle θ of the second mounting portion 510 is less than the sector central angle α of the second working portion 520. In this implementation, the sector central angle θ of the second mounting portion 510 is preferably set to 50°. It may be understood that the sector central angle θ of the second mounting portion 510 may also be set to 40°, 45°, 48°, 52°, 55°, 60°, or any other appropriate value, so long as it satisfies requirements of mounting the steel wire head 500. Of course, the central angle θ of the annular sector-shaped second mounting portion 510 may also be set to be consistent with the central angle α of the annular sector-shaped second working portion 520.

Referring to Fig. 14, the second mounting portion 510 is provided with a second mounting slot 511 and a second limiting hole 512, the second mounting slot 511 having a substantially U shape with an open rear end, a plurality of the second limiting holes 512 being distributed circumferentially at intervals on an outer periphery of the second mounting slot 511. When mounting the steel wire head 500 to the machine body, the second mounting portion 510 moves from front to rear to snap the inner shaft 121 into the second mounting slot 511, the second limiting holes 512 being aligned with the limiting pins 127; reset of the inner shaft 121 drives the lower chuck 124 to move upward to fit with the upper chuck 123 so as to clamp the second mounting portion 510, the limiting pins 127 being inserted into their corresponding second limiting holes 512.

In this implementation, the second mounting portion 510 has a plate shape with its front side being tightly clamped between the first clamping plate 523 and the second clamping plate 524; the first clamping plate 523, the second clamping plate 524, the second mounting portion 510, and the securing plate 525 are securely fitted via bolts and nuts; and the respective wire blades 522 extend forward away from the second mounting portion 510 substantially along different radial directions of the second working portion 520, i.e., the wire blades 522 are arranged substantially in alignment with the second mounting portion 510. When the steel wire head 500 is mounted to the machine body, the entire steel wire head 500 is rested in the height range of the handle 310.

When the machine body is operating, the electric motor 110 actuates, via the transmission structure 100C and the clamping structure 100B, the steel wire head 500 to swing left and right back and force; the wire blades 522 on the steel wire head 500 may perform weed removal, moss removal, and de-rusting when swinging left and right back and forth.

Referring to Fig. 15, the second working portion 520 may be provided with an edge wrapping piece 526, the edge wrapping piece 526 being provided at one side of the second working portion 520 facing the second mounting portion 510 to clamp inner edges of the first clamping plate 523, the second clamping plate 524, and the securing plate 525. The edge wrapping piece 526 may effectively enhance the strength of the first clamping plate 523 and the second clamping plate 524 in clamping the securing plate 525, which helps enhance structural stability of the working portion. In this case, the second mounting portion 510 may be disposed at an outer side of the first clamping plate 523 or an outer side of the second clamping plate 524, the second mounting portion 510 and the second working portion 520 being fixed together via a fastener.

Additionally, the wire blades 522 may extend obliquely away from the second mounting portion 510. Specifically, the respective wire blades 522 extend obliquely downward along different radial directions of the second working portion 520.

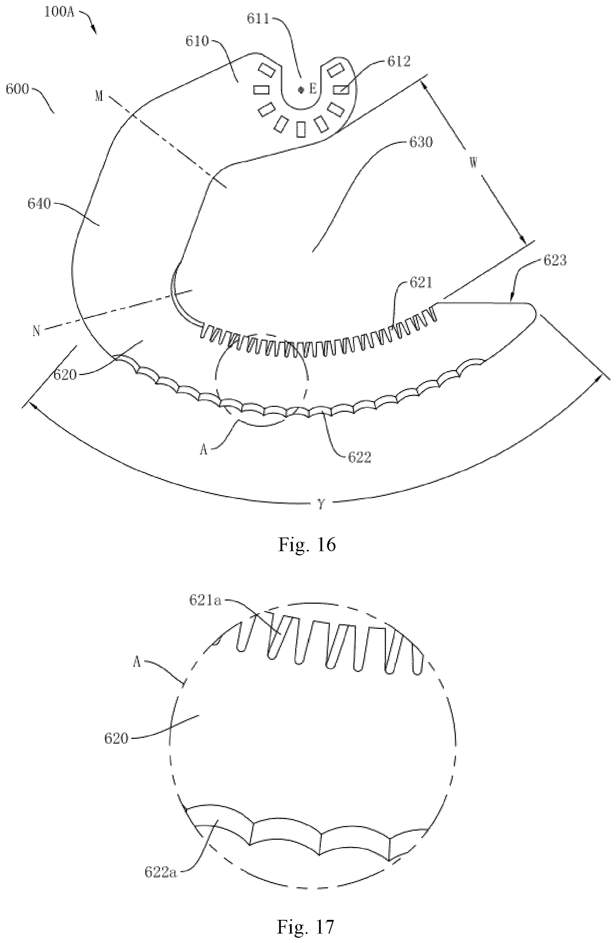

Referring to Fig. 16, the working head 100A of the garden multitool further includes a saw blade 600, i.e., the saw blade 600 is a type of the working head 100A. The saw blade 600 comprises a third mounting portion 610 and a sawing portion 620 which are fixed relative to each other, an object holding slot 630 with one side open being provided between the sawing portion 620 and the third mounting portion 610, a plurality of inner saw teeth 621 being provided on an inner edge of the sawing portion 620 facing the object holding slot 630, a plurality of outer saw teeth 622 being provided on an outer edge of the sawing portion 620 facing away from the object holding slot 630.

When performing cutting with the inner saw teeth 621, the user may pull the tool rearward so that the inner saw teeth 621 move rearward relative to a to-be-cut branch; particularly when the saw blade 600 is operated to cut off a thick branch higher up on a tree, the saw blade 600 may move from top to down relative to the branch; since the saw cut on the branch faces up, the branch drooping under self-weight will cause the saw cut widened, preventing the saw cut from being narrowed by the drooping branch causing the saw blade 600 to be stuck, which helps enhance cutting efficiency and improve user experience.

In this implementation, the saw blade 600 further comprises a connecting portion 640 one end of which joins with the third mounting portion 610 and another end of which joins with the sawing portion 620, the object holding slot 630 being enclosed by the third mounting portion 610, the connecting portion 640, and the sawing portion 620, one side of the object holding slot 630 distant from the connecting portion 640 being open. This reasonable configuration of the saw blade 600 ensures its structural strength. The third mounting portion 610, the sawing portion 620, and the connecting portion 640 are preferably unitarily formed, which further enhances structural strength of the saw blade 600 while eliminating a need of assembling the saw blade 600 and facilitates improvement of productivity of the saw blade 600. Preferably, the third mounting portion 610, the sawing portion 620, and the connecting portion 640 are unitarily formed and aligned left and right, i.e., the mounting portion 610, the sawing portion 620, and the connecting portion 640 are located on a same plane, the saw blade 600 having a thin sheet shape. The line M in Fig. 16 indicates a rough dividing line between the third mounting portion 610 and the connecting portion 640, and the line N indicates a rough dividing line between the connecting portion 640 and the sawing portion 620. It may be understood that the line M and the line N only schematically illustrate different portions of the saw blade 600, which are not exact dividing lines between the third mounting portion 610, the connecting portion 640, and the sawing portion 620; the positional distribution relationships between the three may also be indicated by another type of dividing lines.

In this implementation, the third mounting portion 610 is provided with a third mounting slot 611 and a third limiting hole 612, the third mounting slot 611 having a substantially U shape with its rear end open, a plurality of the third limiting holes 612 being distributed circumferentially at intervals on the outer periphery of the third mounting slot 611. When the saw blade 600 is mounted to the machine body, the third mounting portion 610 moves rearward from front so that the inner shaft 121 is snapped into the third mounting slot 611, the third limiting holes 612 being aligned with the limiting pins 127; reset of the inner shaft 121 drives the lower chuck 124 to move upward to fit with the upper chuck 123 to clamp the third mounting portion 610, the limiting pins 127 being inserted into their corresponding third limiting holes 612. Since the saw blade 600 has a flat sheet shape, the entire saw blade 600 is rested in the widthwise scope of the handle 310 when being assembled to the machine body.

In this implementation, the sawing portion 620 has an annular sector shape, the inner saw teeth 621 are distributed in the arc direction along the arcuate inner edge of the sawing portion 620, and the outer saw teeth 622 are distributed in the arc direction along the arcuate outer edge of the sawing portion 620. Preferably, the annular sector-shaped sawing portion 620 is concentrically arranged with the third mounting slot 611. Point E in Fig. 16 represents a central point of the third mounting slot 611, i.e., the central point of the annular sector-shaped sawing portion 620. The central angle γ of the annular sector-shaped sawing portion 620 is in a range from 60° to 120°, i.e., 60° ≤ γ ≤ 120°. In this implementation, γ is preferably set to 90°. It may be understood that the central angle γ of the annular sector-shaped sawing portion 620 may also be set to 60°, 65°, 70°, 75°, 80°, 85°, 89°, 91°, 95°, 100°, 105°, 110°, 115°, 120°, or any other appropriate value.

To enable the inner saw teeth 621 to effectively cut off a branch, it is appropriate to set the object holding slot 630 with a slot width W, 30mm≤W≤100mm. By appropriately setting the slot width W of the object holding slot 630, the thickness of a branch to be cuttable by the inner saw teeth 621 can be limited to a reasonable extent, which satisfies cutting requirements while ensuring structural stability of the saw blade 600. If the slot width of the object holding slot 630 is smaller than 30mm, only a thinner branch can be cut by the inner saw teeth 621, which would not satisfy the user's cutting demands. If the slot width of the object holding slot 630 is greater than 100mm, the larger gap between the sawing portion 620 and the third mounting portion 610 easily causes the sawing portion 620 to be deformed under stress, which compromises structural stability of the saw blade 600 and thereby compromises functional stability of the saw blade 600. In this implementation, the radius of the inner edge of the sawing portion 620 is about 70mm, the radius of the outer edge of the sawing portion 620 is about 90mm, the slot width of the object holding slot 630 decreases from the open side towards the side where the connecting portion 640 is located, and the slot width of the open side of the object holding slot 630 is about 55mm. It may be understood that the slot width of the open side of the object holding slot 630 may also be set to 30mm, 40mm, 50mm, 60mm, 70mm, 80mm, 90mm, 100mm, or any other appropriate value.

To enable a to-be-cut branch to enter the object holding slot 630 smoothly, the sawing portion 620 is provided with a guiding beveled edge 623 at a position facing the open side of the object holding slot 630, the guiding beveled edge 623 forming a clearance area to appropriately expand the width of the open side of the object holding slot 630; in addition, since the guiding beveled edge 623 plays a certain role of guiding the branch to enter the object holding slot 630, the branch can enter the object holding slot 630 more easily.

Referring to Fig. 17, in this implementation, the inner saw tooth 621 is a trapezoidal tooth, an inner tooth edge 621a being provided at at least one waist of the inner saw tooth 621; the outer saw tooth 622 is an arc-shaped tooth and provided with an arcuate outer tooth edge 622a. Preferably, the inner tooth edges 621a of two adjacent inner saw teeth 621 are arranged at waists of different sides so that the inner saw teeth 621 can cut the branch bidirectionally when the saw blade 600 swings back and forth. It may be understood that the inner saw teeth 621 and the outer saw teeth 622 may also be set to other tooth profiles that can satisfy branch cutting requirements.

When the saw blade 600 is mounted to the machine body to cut off a branch or weeds, the third mounting portion 610 moves rearward from front so that the inner shaft 121 is snapped into the third mounting slot 611, the third limiting holes 612 being aligned with the limiting pins 127; reset of the inner shaft 121 drives the lower chuck 124 to move upward to fit with the upper chuck 123 to thereby clamp the third mounting portion 610, the limiting pins 127 being inserted into the corresponding third limiting holes 612. Since the saw blade 600 has a flat sheet shape, the assembled saw blade 600 is entirely rested in the heightwise scope of the handle 310.

During operating, the electric motor 110 may actuate, via the transmission structure 100C and the clamping structure 100B, the saw blade 600 to swing left and right back and forth on the working plane at a high frequency. If a to-be-cut branch is thick, the machine body first moves allowing for the branch to enter the object holding slot 630 so as to be cut by the inner saw teeth 621; during cutting, the user may pull the machine body downward so that the saw blade 600 moves from up to down relative to the branch; since the saw cut of the branch faces up, the branch drooping under self-weight causes the saw cut widened, preventing the saw cut of the drooping branch from being narrowed causing the saw blade 600 stuck. If the to-be-cut branch is thin or it is weeds to be removed, the machine body moves to cut their root with the outer saw teeth 622; as the branch or weeds are light-weighted, the branch or weeds will not cause the saw blade 600 stuck.

It may be understood that the sawing portion 620 may also have a straight-line shape; in this case, the inner saw teeth 621 are distributed in the straight-line direction along the inner edge of the sawing portion 620, and the outer saw teeth 622 are distributed in the straight-line direction along the outer edge of the sawing portion 620.

It may be understood that the inner saw teeth 621 and the outer saw teeth 622 may be formed otherwise, where an inner rack having the inner saw teeth 621 are secured to an inner edge of one side of the sawing portion 620 facing the object holding slot 630, and an outer rack having the outer saw teeth 622 are secured on an outer edge of one side of the sawing portion 620 facing away from the object holding slot 630.

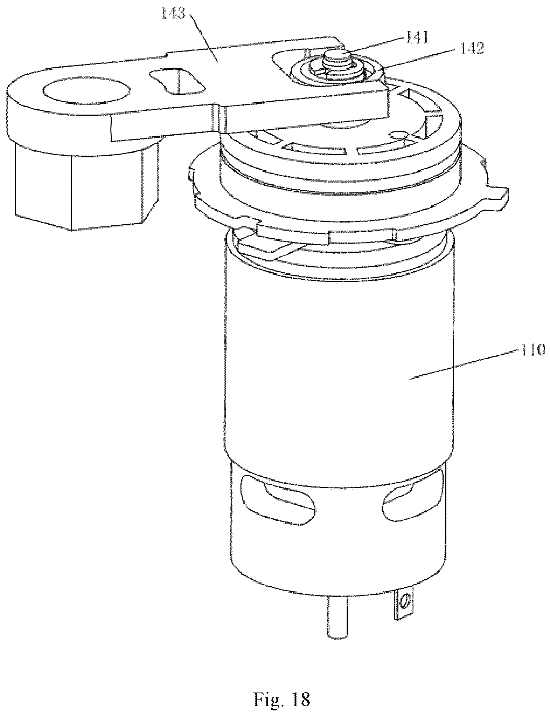

Referring to Fig. 18, the axial direction of the electric motor 110 may also be set perpendicular to the working plane P; in this case, the axial direction of the output shaft 111, the axial direction of the inner shaft 121, the axial direction of the outer shaft 122, and the axial direction of the rotary shaft 142 are parallel to one another, which may reduce the front-rear length of the working assembly 100 to a reasonable extent. The electric motor 110 actuates, via the rotary shaft 141, the rotary member 142 to make a high-speed, eccentric revolution on a left-right plane, and the eccentrical rotation of the rotary member 142 drives, via the shift fork 143 and the clamping structure 100B, the working head 100A to swing left and right back and forth.

In addition to the example implementations described *supra,* the present invention also has other implementations. Those skilled in the art may make various changes and modifications to the present invention, and all such modifications and changes without departing from the spirits of the present invention shall fall within the scope of protection limited in the claims appended hereto.

## Claims

1. A garden multitool, comprising a working assembly, the working assembly having an electric motor and a working head, the electric motor actuating the working head to swing back and forth on a working plane, **characterized in that** the garden multitool further comprises a shaft and a handle assembly, the working assembly being attached to a front end of the shaft, the handle assembly being attached to a rear end of the shaft, a lengthwise direction of the shaft being parallel to the working plane.

2. The garden multitool according to claim 1, **characterized in that** the working assembly comprises a head housing, the electric motor being disposed inside the head housing, the working head being disposed outside the head housing; and a securing base is provided at the front end of the shaft, the head housing and the securing base being detachably fitted.

3. The garden multitool according to claim 2, **characterized in that** the handle assembly is detachably disposed at the rear end of the shaft, and the head housing is detachably fitted with the handle assembly.

4. The garden multitool according to claim 2, further comprising a body housing, a grip portion being formed on the body housing, the head housing and the body housing being detachably fitted.

5. The garden multitool according to claim 1, **characterized in that** the handle assembly comprises a handle and a battery pack, the battery pack being detachably connected to the handle.

6. The garden multitool according to claim 1, **characterized in that** a back-and-forth swing angle of the working head ranges from 3° to 10°.

7. The garden multitool according to claim 1, **characterized in that** the working assembly comprises a clamping structure and a transmission structure, the clamping structure and the transmission structure being disposed in the head housing, the clamping structure being configured to clamp or release the working head, the transmission structure being configured to transfer power, and the electric motor actuates, via the transmission structure and the clamping structure, the working head to swing back and forth on the working plane.

8. The garden multitool according to claim 7, **characterized in that** an axial direction of the electric motor is parallel to the working plane; or, an axial direction of the electric motor is perpendicular to the working plane.

9. The garden multitool according to claim 1, **characterized in that** the garden multitool has a heightwise direction that is perpendicular to the working plane and perpendicular to the lengthwise direction of the shaft, the working head being at least partially rested in a heightwise scope of the handle assembly in the heightwise direction.

10. The garden multitool according to claim 9, **characterized in that** the working head comprises a mounting portion and a working portion provided at a front side of the mounting portion, the mounting portion and the working portion being disposed in a misaligned manner in the heightwise direction, the working portion being rested in the heightwise scope of the handle assembly in the heightwise direction.

11. The garden multitool according to claim 9, **characterized in that** the working head comprises a mounting portion and a working portion provided at a front side of the mounting portion, the mounting portion and the working portion being aligned in the heightwise direction, the working head being entirely rested in the heightwise scope of the handle assembly in the heightwise direction.

12. The garden multitool according to claim 9, **characterized in that** the handle assembly comprises a handle and a battery pack, the working head being at least partially rested in a heightwise scope of the handle in a heightwise direction.

13. A labor-saving power tool according to claim 12, **characterized in that** the handle has a height ranging from 30mm to 60mm.

14. A steel wire head for a garden multitool, comprising a second mounting portion and a second working portion that are fixed relative to each other, an arcuate edge and a wire blade being provided at one side of the second working portion facing away from the second mounting portion, a plurality of the wire blades being provided along an arc direction of the arcuate edge and extending away from the second mounting portion.

15. The steel wire head according to claim 14, **characterized in that** a central angle α of the arcuate edge is greater than or equal to 60° and less than or equal to 120°.

16. The steel wire head according to claim 14, **characterized in that** an end portion of the wire blade facing away from the second mounting portion has a conical shape with a conical angle *β* greater than or equal to 45° and less than or equal to 90°.

17. The steel wire head according to claim 14, **characterized in that** the second working portion comprises a securing member, a first clamping plate, and a second clamping plate, the respective wire blades being disposed on the securing member, the first clamping plate and the second clamping plate being disposed at two opposite sides of the securing member to clamp the securing member and respective end portions of the wire blades facing the second mounting portion.

18. The steel wire head according to claim 17, **characterized in that** a first skirt is provided at a front side of the first clamping plate facing away from the second mounting portion, and a second skirt is provided at a front side of the second clamping plate facing away from the second mounting portion, the first skirt and the second skirt being fitted to clamp the respective end portions of the wire blades facing the second mounting portion.

19. A saw blade for a garden multitool, comprising a third mounting portion and a sawing portion which are fixed relative to each other, **characterized in that** an object holding slot with one side open is provided between the sawing portion and the third mounting portion, a plurality of inner saw teeth are arranged on an inner edge of the sawing portion facing the object holding slot, and a plurality of outer saw teeth are provided on an outer edge of the sawing portion facing away from the object holding slot.

20. The saw blade according to claim 19, comprising a connecting portion one end of which joins with the third mounting portion and another end of which joins with the sawing portion, the object holding slot being enclosed by the third mounting portion, the connecting portion, and the sawing portion, the object holding slot being open at one side distant from the connecting portion.
